# EUROPÄISCHE PATENTSCHRIFT

(11) **EP 2 855 215 B1**
(45) Veröffentlichungstag und Bekanntmachung des Hinweises auf die Patenterteilung: **19.08.2015**
(21) Anmeldenummer: 13739140.5
(22) Anmeldetag: 08.05.2013
(51) Int. Cl.: B60R 22/34, B60R 22/28

(54) **GURTAUFROLLER**
BELT RETRACTOR
ENROULEUR DE CEINTURE

(30) Priorität: 24.05.2012 DE 102012208700
(43) Veröffentlichungstag der Anmeldung: 08.04.2015
(73) Patentinhaber: Takata AG, 63743 Aschaffenburg (DE)
(72) Erfinder: GLÖCKLER, Oliver, 89278 Nersingen (DE); MILLER, Tobias, 89233 Neu-Ulm (DE); PECHHOLD, Christoph, 89155 Erbach (DE)
(74) Vertreter: Fischer, Uwe
(86) Internationale Anmeldenummer: PCT/DE2013/200013
(87) Internationale Veröffentlichungsnummer: WO 2013/174375

(56) Entgegenhaltungen:
- US-A1- 2011 057 064
- US-B1- 6 216 972

## Beschreibung

Die Erfindung bezieht sich auf einen Gurtaufroller mit den Merkmalen gemäß dem Oberbegriff des Patentanspruchs 1.

Ein derartiger Gurtaufroller ist aus der US-Patentschrift US 6,216,972 B1 bekannt. Der vorbekannte Gurtaufroller weist eine Gurtspule zum Auf- und Abwickeln eines Sicherheitsgurts sowie eine mit der Gurtspule in Verbindung stehende sperrbare Sperrbasis auf, die vor einem Sperren mit der Gurtspule mitgedreht wird und nach einem Sperren in ihrer Drehbewegung blockiert wird. Im Falle eines Sperrens der Sperrbasis ist zum Zwecke der Gurtkraftbegrenzung eine Relativdrehung zwischen Sperrbasis und Gurtspule möglich; bei dieser Relativdrehung wird ein Band aus Metall durch einen Schikanenkanal hindurchgeführt und dabei mehrfach umgebogen. Durch das mehrfache Umbiegen des Bandes wird Energie verbraucht, so dass die Relativdrehung zwischen Sperrbasis und Gurtspule sowie damit einhergehend ein weiterer Auszug des Sicherheitsgurtes erschwert und eine Gurtrückhaltekraft erzeugt wird.

Ein weiterer Gurtaufroller ist aus der US-Offenlegungsschrift US2011/057064 A1 bekannt.

Der Erfindung liegt die Aufgabe zugrunde, einen Gurtaufroller anzugeben, der einen kompakten Aufbau aufweist und es ermöglicht, die Gurtrückhaltekraft für den Fall einer Relativdrehung zwischen Gurtspule und Sperrbasis in einem weiten Bereich gezielt vorzugeben.

Diese Aufgabe wird erfindungsgemäß durch einen Gurtaufroller mit den Merkmalen gemäß Patentanspruch 1 gelöst. Vorteilhafte Ausgestaltungen des erfindungsgemäßen Gurtaufrollers sind in Unteransprüchen angegeben.

Danach ist erfindungsgemäß vorgesehen, dass der Gurtaufroller ein Band aufweist, das im Falle einer Relativdrehung zwischen Gurtspule und Sperrbasis in einen Spalt gezogen wird, und der Spalt randseitig durch zumindest ein deformierbares Element begrenzt ist, das von dem in den Spalt gezogenen Band deformiert wird.

Ein wesentlicher Vorteil des erfindungsgemäßen Gurtaufrollers ist darin zu sehen, dass bei diesem nicht die Deformation des Bandes zur Erzeugung einer Rückhaltekraft herangezogen wird, sondern stattdessen die Deformation zumindest eines deformierbaren Elementes, das von dem in den Spalt gezogenen Band deformiert wird. Durch den erfindungsgemäß vorgesehenen Energieabbau durch das deformierbare Element und nicht durch das Band selbst lässt sich die Rückhaltekraft sehr gezielt einstellen und der Aufbau des Gurtaufrollers dennoch sehr kompakt halten. So steht aufgrund des Vorhandenseins des zumindest einen deformierbaren Elements nämlich eine Vielzahl an Einstellparametern zur Verfügung, mit denen für den Fall einer Relativdrehung zwischen Gurtaufroller und Sperrbasis die Gurtrückhaltekraft beeinflusst werden kann. Beispielsweise kann über die Länge des Bandes bestimmt werden, über welchen Relativdrehwinkel eine Rückhaltekraft durch das Band erzeugt werden soll. Die Geometrie und das Material des oder der deformierbaren Elemente sowie die Spaltbreite des Spaltes stellen weitere Einstellmöglichkeiten zur Verfügung, mit denen die Charakteristik des Gurtbandauszugs im Falle einer Relativdrehung zwischen Sperrbasis und Gurtspule beeinflusst bzw. den jeweiligen Anforderungen entsprechend gezielt eingestellt werden kann.

Bei dem erfindungsgemäßen Gurtaufroller kann beispielsweise in sehr einfacher und damit vorteilhafter Weise festgelegt werden, ob der Drehwinkel zwischen Gurtspule und Sperrbasis durch das Band begrenzt werden soll: Beispielsweise kann gemäß einer ersten vorteilhaften Variante vorgesehen sein, dass bei einem vollständigen Einzug des Bandes in den Spalt eine weitere Relativdrehung zwischen Sperrbasis und Gurtspule blockiert wird, beispielsweise mit Hilfe eines Stoppelements, das an einem Bandende des Bandes angeordnet ist.

Gemäß einer zweiten vorteilhaften Variante kann beispielsweise vorgesehen sein, dass die Relativdrehung zwischen Gurtspule und Sperrbasis dadurch beendet wird, dass der Spalt aufgrund der Spaltbreite ab einem vorgegebenen maximalen Grenzdrehwinkel zwischen Gurtspule und Sperrbasis keinen weiteren Bandeinzug mehr gestattet und es zu einem Blockieren bzw. Verklemmen des Bandes im Spalt kommt.

Gemäß einer dritten vorteilhaften Variante kann beispielsweise vorgesehen sein, dass es zu keiner Begrenzung des Drehwinkels zwischen Gurtspule und Sperrbasis kommt und das Band nach einem vollständigen Einzug in den Spalt beispielsweise lediglich weiter mitgedreht wird.

Als besonders vorteilhaft wird es angesehen, wenn eine Mehrzahl an deformierbaren Elementen vorhanden ist; in einem solchen Fall kann die Charakteristik der Rückhaltekraft zusätzlich auch durch die Anordnung der deformierbaren Elemente zueinander bestimmt werden.

Der Spalt, der randseitig durch das zumindest eine deformierbare Element begrenzt ist, kann bereits vor dem Einführen des Bandes vorhanden sein bzw. eine Spaltbreite größer als Null aufweisen, bevor das Band in den Spalt hineingezogen wird. Alternativ kann der Spalt auch erst durch das Einführen des Bandes gebildet werden.

Als besonders vorteilhaft wird es angesehen, wenn der Spalt ringförmig ist und durch eine äußere ringförmige Spaltwand und eine innere ringförmige Spaltwand begrenzt ist. Die Form des ringförmigen Spaltes ist dabei beliebig; der ringförmige Spalt kann kreisförmig, oval oder auch vieleckig sein. Ein ringförmiger Spalt ermöglicht ein mehrfaches Aufwickeln des Bands und somit Relativdrehwinkel über 360° hinaus.

Vorzugsweise ist der Spalt einerseits durch die Sperrbasis oder zumindest ein mit der Sperrbasis drehfest verbundenes Element und andererseits durch die Gurtspule oder zumindest ein mit der Gurtspule drehfest verbundenes Element begrenzt.

Mit Blick auf eine minimale Teilezahl wird es als vorteilhaft angesehen, wenn die innere ringförmige Spaltwand durch einen ringförmigen äußeren Abschnitt der Gurtspule gebildet ist.

Der Spalt und/oder die ringförmigen Spaltwände des Spalts sind mit Blick auf einen kompakten Aufbau des Gurtaufrollers vorzugsweise konzentrisch zu der Achse des Gurtaufrollers angeordnet; alternativ ist jedoch auch eine nicht konzentrische bzw. eine axial versetzte Anordnung der Ringmitte des ringförmigen Spaltes relativ zu der Achse des Gurtaufrollers denkbar. Im Falle einer exzentrischen Anordnung ist der Verlauf des Kraftanstiegs im Falle einer Relativdrehung zwischen Gurtspule und Sperrbasis sehr einfach einstellbar.

Bezüglich der Positionierung des zumindest einen deformierbaren Elements wird es als vorteilhaft angesehen, wenn dieses an der äußeren ringförmigen Spaltwand oder an der inneren ringförmigen Spaltwand ausgebildet ist.

Die äußere Spaltwand des Spaltes kann beispielsweise durch die Ringinnenwand einer einzigen Ringscheibe gebildet sein. Als besonders vorteilhaft wird es jedoch angesehen, wenn die äußere Spaltwand des Spaltes durch die Ringinnenwände zumindest zweier - entlang der Gurtspulenachse gesehen - hintereinander angeordneter Ringscheiben gebildet wird, die jeweils mit einer Vielzahl an nach innen ragenden deformierbaren Elementen ausgestattet sind. Bei dieser Ausgestaltung ist es möglich, durch eine unterschiedliche Materialwahl und/oder eine unterschiedliche geometrische Ausgestaltung der deformierbaren Elemente an den Ringscheiben einen gewünschten Kraftverlauf beim Gurtbandauszug besonders genau zu erreichen.

Der Innendurchmesser der Ringscheibe kann über dem Umfang variieren, beispielsweise durch eine über dem Umfang variable Größe der nach innen ragenden deformierbaren Elemente; dies ermöglicht beispielsweise einen kontinuierlichen oder gestuften Kraftanstieg im Falle einer Relativdrehung zwischen Sperrbasis und Gurtspule.

Wird die äußere Spaltwand des Spaltes durch zwei oder mehr Ringscheiben gebildet, so ist gemäß einer besonders bevorzugten Ausgestaltung vorgesehen, dass die nach innen ragenden deformierbaren Elemente zumindest zweier Ringscheiben derart verdreht zueinander angeordnet sind, dass das Band beim Einführen in den Spalt auf die nach innen ragenden deformierbaren Elemente der zumindest zwei Ringscheiben zeitlich versetzt trifft. Eine verdrehte Anordnung der deformierbaren Elemente der Ringscheiben zueinander ermöglicht in besonders einfacher Weise, einen stetigen Verlauf der Gurtbandauszugskraft über dem Relativdrehwinkel zwischen Sperrbasis und Gurtspule einzustellen, da Krafteinbrüche in den Abschnitten zwischen aufeinanderfolgenden deformierbaren Elementen einer Ringscheibe durch versetzt angeordnete deformierbare Elemente einer anderen Ringscheibe kompensiert werden können.

Mit Blick auf einen besonders kontinuierlichen Kraftverlauf wird es als vorteilhaft angesehen, wenn die äußere Spaltwand des Spaltes durch die Ringinnenwände zumindest dreier - entlang der Gurtspulenachse gesehen - hintereinander angeordneter Ringscheiben gebildet wird, die jeweils mit einer Vielzahl an nach innen ragenden deformierbaren Elementen ausgestattet sind, wobei die nach innen ragenden deformierbaren Elemente der Ringscheiben zueinander verdreht sind und das Band beim Einführen in den Spalt auf die nach innen ragenden deformierbaren Elemente der zumindest drei Ringscheiben zeitlich versetzt trifft.

Bei den Ringscheiben handelt es sich vorzugsweise um Gussoder Stanzteile. Diese sind bevorzugt mit der Sperrbasis oder mit der Gurtspule drehfest verbunden, beispielsweise durch Aufstecken (z. B. mit Bolzen), durch Verschrauben, durch Vernieten, durch Verkleben, durch Verschweißen, durch Verlöten usw. Im Falle einer solchen Ausgestaltung kann die Außenkontur der Ringscheiben eine Auflagefläche und damit eine Lagerfläche bilden, auf der das Band aufliegt, bevor es in den Spalt gezogen wird.

Alternativ kann die Außenkontur der Ringscheibe(n) derart an die Innenkontur eines Abschnitts der Sperrbasis angepasst sein, dass die Ringscheiben zumindest abschnittsweise einen Formschluss mit der Sperrbasis bilden; in diesem Fall können die Ringscheiben direkt auf bzw. in die Sperrbasis gesteckt werden. Vorzugsweise ist auf der Außenkontur der Ringscheibe(n) eine Verzahnung, beispielsweise durch eine Wellenform, vorgesehen, die an eine korrespondierende Verzahnung bzw. Wellenform an der Innenkontur eines Abschnitts der Sperrbasis angepasst ist.

Bei der letztgenannten Ausgestaltung wird es als vorteilhaft angesehen, wenn an der Sperrbasis ein Trennring einteilig angeformt oder von außen angebracht ist, dessen Außenkontur eine Auflagefläche und damit eine Lagerfläche bildet, auf der das Band aufliegt, bevor es in den Spalt gezogen wird. Die Innenkontur dieses Trennrings kann in diesem Falle die Innenkontur des Abschnitts der Sperrbasis bilden, der mit den Ringscheiben den beschriebenen Formschluss bildet.

Mit Blick auf eine einfache Montage wird es darüber hinaus als vorteilhaft angesehen, wenn das Band mit einem Bandende mit der Gurtspule verbunden ist.

Das andere Bandende des Bandes kann beispielsweise mit einem Stoppelement versehen sein, um eine weitere Relativdrehung zwischen der Sperrbasis und der Gurtspule zu beenden, wenn bzw. bevor das Band vollständig in den Spalt hineingezogen worden ist.

Mit Blick auf einen kompakten Aufbau wird es darüber hinaus als vorteilhaft angesehen, wenn der Gurtaufroller einen ringförmigen Aufbewahrungsspalt aufweist, in dem das Band vor einer Relativdrehung zwischen Gurtspule und Sperrbasis aufgewickelt aufbewahrt wird und von dem es im Falle einer Relativdrehung zwischen Sperrbasis und Gurtaufroller in den Spalt mit dem zumindest einen deformierbaren Element - nachfolgend auch kurz "deformierbarer Spalt" genannt - hineingezogen wird.

Besonders bevorzugt sind der ringförmige Aufbewahrungsspalt sowie der deformierbare Spalt, der durch das zumindest eine deformierbare Element begrenzt ist, konzentrisch zueinander angeordnet. Eine solche Ausgestaltung ermöglicht es, das Band von dem ringförmigen Aufbewahrungsspalt in den deformierbaren Spalt hineinzuziehen, sobald es zu einer Relativdrehung zwischen der Gurtspule und der Sperrbasis kommt, ohne dass das Band die Querschnittsebene des ringförmigen Aufbewahrungsspalts verlassen muss.

Bezüglich des ringförmigen Aufbewahrungsspalts wird es außerdem als vorteilhaft angesehen, wenn der Durchmesser des ringförmigen Aufbewahrungsspalts größer ist als der Durchmesser des ringförmigen deformierbaren Spalts, der durch das zumindest eine deformierbare Element begrenzt ist, und der ringförmige Aufbewahrungsspalt konzentrisch um den deformierbaren Spalt herum angeordnet ist.

Für ein einfaches Einfädeln des Bandes in den deformierbaren Spalt wird es als vorteilhaft angesehen, wenn die äußere Spaltwand einen Schlitz aufweist, der ein Einziehen des Bandes von außen in den deformierbaren Spalt hinein ermöglicht. Vorzugsweise erstreckt sich die Längsrichtung des Schlitzes parallel zur Achse des Gurtaufrollers.

Die deformierbaren Elemente können beispielsweise durch Zähne gebildet sein, die an der äußeren ringförmigen Spaltwand und/oder an der inneren ringförmigen Spaltwand ausgebildet sind. Die Zähne sind vorzugsweise in Richtung des Spaltinneren ausgerichtet.

Zusätzlich oder alternativ kann vorgesehen sein, dass das oder die deformierbaren Elemente jeweils durch einen radial in Richtung des Spaltinneren ausgerichteten Abschnitt der inneren oder äußeren ringförmigen Spaltwand gebildet sind. Die Deformierbarkeit der Abschnitte wird vorzugsweise durch jeweils ein oder mehrere Löcher oder ein oder mehrere Bohrungen gewährleistet. Die Löcher oder Bohrungen liegen vorzugsweise innen, also radial betrachtet hinter der jeweiligen Spaltwand und schwächen diese, so dass ein Verbiegen der jeweiligen Spaltwand beim Eindrehen des Bandes auftreten kann.

Ist beispielsweise die äußere Spaltwand des Spaltes durch die Ringinnenwand einer Ringscheibe gebildet, so können die deformierbaren Elemente durch nach innen ragende deformierbare Abschnitte der Ringinnenwand der Ringscheibe gebildet werden, wobei hinter den jeweiligen Abschnitten - also radial außen im Material der Ringscheibe - Löcher oder Bohrungen vorhanden sind. Die vorzugsweise als Durchgangslöcher ausgebildeten Löcher oder Bohrungen erstrecken sich bevorzugt parallel zur Gurtspulenachse.

Alternativ kann vorgesehen sein, dass das oder die deformierbaren Elemente jeweils zumindest zwei Stützglieder umfassen, die miteinander durch einen Verbindungsabschnitt verbunden sind. Der Verbindungsabschnitt bildet vorzugsweise einen kreisbogenförmigen Abschnitt der äußeren ringförmigen Spaltwand oder der inneren ringförmigen Spaltwand. Die Ausgestaltung entspricht von der Arbeitsweise der oben beschriebenen Ausführungsform, bei der die Ringinnenwand der Ringscheibe durch Löcher mechanisch geschwächt ist.

Vorzugsweise sind die Stützglieder in Richtung des Spaltinneren ausgerichtet.

Bezüglich des Materials des Bandes wird es als vorteilhaft angesehen, wenn dieses aus Stahl, beispielsweise Federstahl, besteht. Die deformierbaren Elemente bestehen vorzugsweise aus Stahl oder Aluminium.

Im Übrigen wird es als vorteilhaft angesehen, wenn das Band an einer Einhängestelle doppellagig in der Gurtspule eingehängt ist und abschnittsweise oder durchgehend doppellagig in den Spalt zwischen Sperrbasis und Gurtspule eingezogen wird. Ein doppellagiges Einhängen vereinfacht die Montage.

Im Falle eines doppellagigen Bandeinzugs in den Spalt zweischen Sperrbasis und Gurtspule wird es darüber hinaus als vorteilhaft angesehen, wenn das Band teils doppellagig und teils einlagig eingezogen wird. Vorzugsweise wird das Band mit einem vorderen doppellagigen Bandabschnitt doppellagig in den Spalt zwischen Gurtspule und Sperrbasis eingezogen und mit einem hinteren einlagigen Bandabschnitt, der sich an den vorderen doppellagigen Bandabschnitt anschließt, nur einlagig. Bei einer solchen Ausgestaltung lässt sich in vorteilhafter Weise erreichen, dass die Reibungskraft, die die deformierbaren Elemente aufgrund etwaig vorhandener Elastizität nach einem erfolgten Wegbiegen noch auf das Band ausüben, jeweils nur im Bereich des vorderen doppellagigen Bandabschnitts - wenn überhaupt - eine Rolle spielt und im Bereich des einlagigen Bandabschnitts deutlich geringer oder sogar völlig vernachlässigbar ist.

Die Erfindung bezieht sich außerdem auf ein Verfahren zum Montieren eines Gurtaufrollers, wie er oben beschrieben worden ist. Erfindungsgemäß ist vorgesehen, dass im Rahmen der Montage die Sperrbasis relativ zur Sperrbasis gedreht und das Band in den Spalt gezogen wird, bis das zum Drehen erforderliche Drehmoment einen vorgegebenen Maximalwert erreicht oder überschritten hat. Alternativ kann im Rahmen der Montage die Sperrbasis relativ zur Sperrbasis gedreht und das Band in den Spalt gezogen werden, bis ein vorgegebener Drehwinkel erreicht wird.

Die Erfindung wird nachfolgend anhand von Ausführungsbeispielen näher erläutert; dabei zeigen beispielhaft
- Figur 1: Bestandteile eines ersten Ausführungsbeispiels für einen erfindungsgemäßen Gurtaufroller in einer Explosionsdarstellung,
- Figur 2: die Bestandteile gemäß Figur 1 im teilweise montierten Zustand,
- Figur 3: einige Bestandteile gemäß Figur 1 im vormontierten Zustand,
- Figur 4: die Bestandteile gemäß Figur 1 in einer dreidimensionalen Sicht von der Seite im aufgeschnittenen Zustand,
- Figur 5: die Funktionsweise des Gurtaufrollers gemäß Figur 1 in einem Querschnitt im Ausgangszustand, also vor einer Relativdrehung zwischen Gurtspule und Sperrbasis,
- Figur 6: den Gurtaufroller gemäß Figur 1, nachdem die Gurtspule um ca. 360° um die gesperrte Sperrbasis gedreht worden ist,
- Figur 7: den Gurtaufroller gemäß Figur 1 nach einer zweimaligen Umdrehung der Gurtspule relativ zur Sperrbasis,
- Figur 8: Bestandteile eines zweiten Ausführungsbeispiels für einen erfindungsgemäßen Gurtaufroller, bei dem deformierbare Elemente durch Stützglieder mit Verbindungsabschnitt gebildet sind,
- Figur 9: Bestandteile eines dritten Ausführungsbeispiels für einen erfindungsgemäßen Gurtaufroller, bei dem ein Band auf der Außenkontur bzw. Außenseite einer oder mehrerer Ringscheiben aufliegt und von dieser Außenseite in einen zwischen der Innenseite der Ringscheibe(n) und der Sperrbasis befindlichen Spalt gezogen wird,
- Figur 10: das Ausführungsbeispiel gemäß Figur 9 in einer anderen Darstellung,
- Figur 11: Bestandteile eines vierten Ausführungsbeispiels für einen erfindungsgemäßen Gurtaufroller, bei dem eine oder mehrere Ringscheiben durch Formschluss in einem an der Sperrbasis angebrachten oder angeformten Trennring gehalten werden und ein Band von der Außenkontur bzw. Außenseite des Trennrings in einen zwischen der Innenseite der Ringscheibe(n) und der Sperrbasis befindlichen Spalt gezogen wird,
- Figur 12: ein Ausführungsbeispiel für die Ausgestaltung deformierbarer Elemente an der Innenkontur von Innenringen, wobei die Deformierbarkeit der deformierbaren Elemente, durch "vergrabene" Löcher oder Bohrungen bewirkt wird,
- Figur 13: ein weiteres Ausführungsbeispiel für die Ausgestaltung deformierbarer Elemente an der Innenkontur von Innenringen, wobei die Deformierbarkeit der deformierbaren Elemente durch vergrabene bzw. dahinter liegende Löcher oder Bohrungen mit unterschiedlichem radialen Abstand bewirkt wird,
- Figur 14: beispielhaft in einer anderen Darstellung einen Drehwinkelversatz zwischen deformierbaren Elementen benachbarter Ringscheiben,
- Figur 15: Bestandteile eines fünften Ausführungsbeispiels für einen erfindungsgemäßen Gurtaufroller, bei dem ein Band doppellagig in einen Spalt zwischen Gurtspule und Sperrbasis eingezogen wird, und
- Figur 16: Bestandteile eines sechsten Ausführungsbeispiels für einen erfindungsgemäßen Gurtaufroller, bei dem ein Band im Bereich eines vorderen Bandabschnitts doppellagig und ansonsten einlagig in einen Spalt zwischen Gurtspule und Sperrbasis eingezogen wird.

In den Figuren werden der Übersicht halber für identische oder vergleichbare Komponenten stets dieselben Bezugszeichen verwendet.

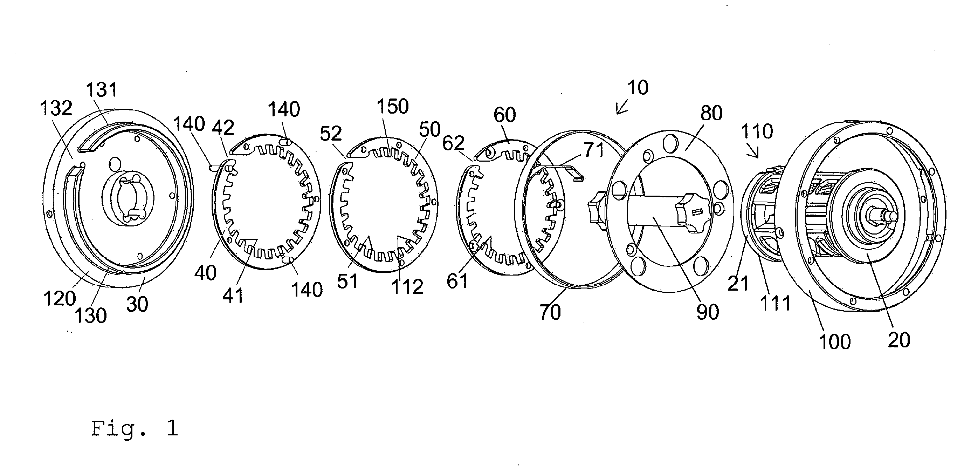

Die Figur 1 zeigt Bestandteile eines Gurtaufrollers 10, der eine Gurtspule 20 sowie eine Sperrbasis 30 aufweist. In der Figur 1 erkennt man darüber hinaus drei Ringscheiben 40, 50 und 60, ein Band 70, eine Trennscheibe 80, einen Torsionsstab 90 sowie einen äußeren Gehäusering 100.

Nach einer Montage der in der Figur 1 gezeigten Bestandteile wird zwischen einem ringförmigen äußeren Abschnitt 21 der Gurtspule 20 und der Ringinnenwände 41, 51 und 61 der drei Ringscheiben 40, 50 und 60 ein ringförmiger Spalt 110 gebildet. Mit anderen Worten bildet der ringförmige äußere Abschnitt 21 der Gurtspule 20 die innere ringförmige Spaltwand 111 des ringförmigen Spalts 110 und die drei Ringinnenwände 41, 51 und 61 der drei Ringscheiben 40, 50 und 60 eine äußere ringförmige Spaltwand 112 des ringförmigen Spalts 110.

Darüber hinaus wird nach einer Montage der in der Figur 1 gezeigten Komponenten ein ringförmiger Aufbewahrungsspalt 120 gebildet, der durch eine Außenwand 131 eines an der Sperrbasis 30 angebrachten oder angeformten Trennringes 130 sowie den Gehäusering 100 begrenzt ist.

In dem ringförmigen Aufbewahrungsspalt 120 befindet sich das Band 70, das mit seinem Bandende 71 durch einen Schlitz 132 im Trennring 130, durch Schlitze 42, 52 und 62 in den drei Ringscheiben 40, 50 und 60 und einen Schlitz 22 in der Gurtspule 20 hindurchgeführt und im Inneren der Gurtspule 20 eingehängt ist.

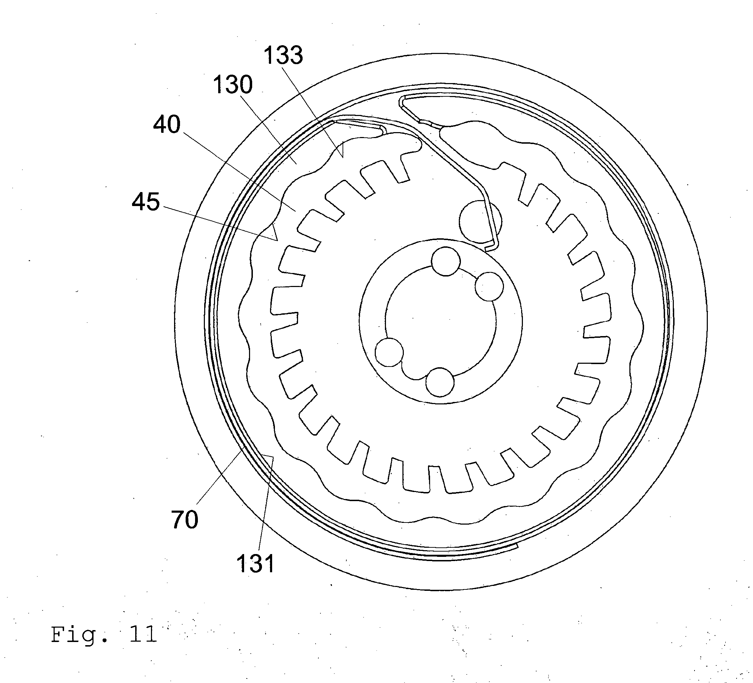

Darüber hinaus erkennt man in der Figur 1 Bolzen 140, die eine Steckverbindung zwischen den drei Ringscheiben 40, 50 und 60 sowie der Sperrbasis 30 ermöglichen. Durch diese Steckverbindung bzw. durch die Bolzen 140 werden die drei Ringscheiben 40, 50 und 60 drehfest mit der Sperrbasis 30 verbunden. Alternativ kann eine drehfeste Verbindung zwischen der Sperrbasis 30 und den Ringscheiben 40, 50 und 60 durch einen Formschluss bewirkt werden; eine solche Ausgestaltung wird weiter unten im Zusammenhang mit der Figur 11 erläutert.

In der Figur 1 lässt sich außerdem erkennen, dass die Ringinnenwände 41, 51 und 61 der drei Ringscheiben 40, 50 und 60 jeweils mit Zähnen 150 ausgestattet sind, die radial nach innen ausgerichtet sind und - wie weiter unten noch näher erläutert werden wird - deformierbare Elemente für den ringförmigen Spalt 110 bilden, wenn das Band 70 von dem ringförmigen Aufbewahrungsspalt 120 in den Spalt 110 hineingezogen wird. Bei dem Spalt 110 handelt es sich also um einen "deformierbaren" Spalt.

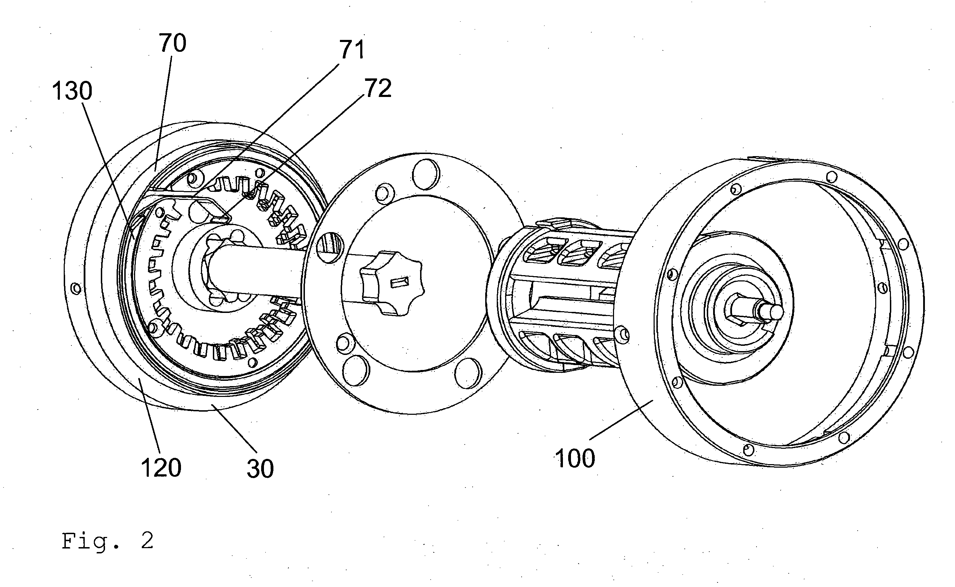

Die Figur 2 zeigt die Bestandteile des Gurtaufrollers 10 gemäß Figur 1 in einem vormontierten Zustand. Man erkennt, dass die Ringscheiben mittels der Bolzen auf die Sperrbasis 30 aufgesteckt sind und dass das Bandende 71 des Bandes 70 durch den Schlitz im Trennring 130 der Sperrbasis 30 sowie die Schlitze in den Ringscheiben hindurchgesteckt ist. Das Bandende 71 weist einen abgewinkelten Abschnitt 72 auf, mit dem das Band 70 in der Gurtspule 20 eingehängt wird.

Darüber hinaus lässt sich in der Figur 2 sehr gut die Bildung des ringförmigen Aufbewahrungsspalts 120 erkennen, der durch die Sperrbasis 30, den Trennring 130 der Sperrbasis 30 und den Gehäusering 100 begrenzt ist. In dem ringförmigen Aufbewahrungsspalt 120 befindet sich das Band 70 mit Ausnahme des Bandendes 71, das durch die Schlitze hindurchgesteckt und in der Gurtspule 20 eingehängt ist.

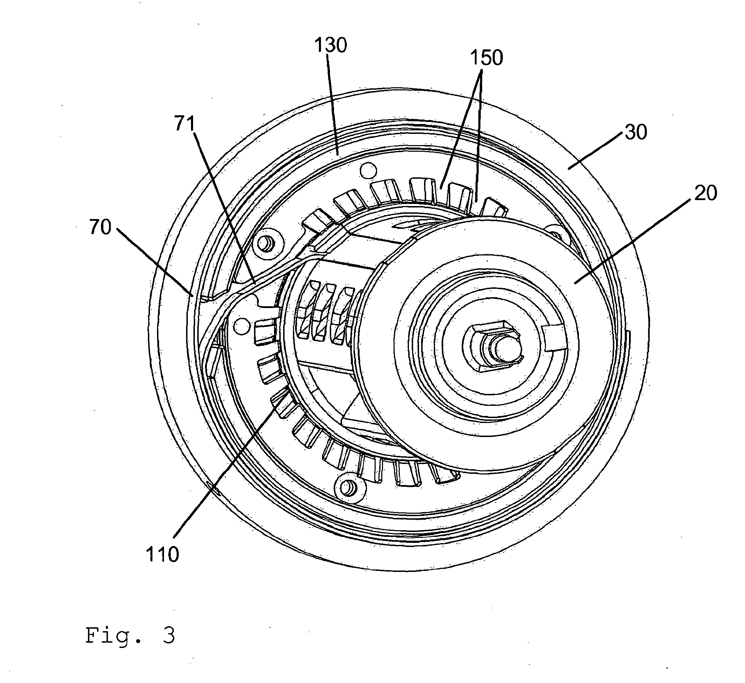

Die Figur 3 zeigt die Bestandteile des Gurtaufrollers 10 gemäß Figur 1 im vollständig montierten Zustand. Man erkennt das Band 70 sowie das in die Gurtspule 20 eingehängte Bandende 71. Darüber hinaus lässt sich erkennen, dass die Zähne 150, die an den Ringinnenwänden der drei Ringscheiben angeordnet sind, zueinander versetzt sind. Dieser Versatz beruht auf einer verdrehten Anordnung der Zähne 150 auf den Ringscheiben 40, 50 und 60 relativ zueinander. Aufgrund dieses Versatzes wird das Gurtband 70, wenn es in den ringförmigen Spalt 110 hineingezogen wird, auf die Zähne 150 der drei Ringscheiben zeitlich versetzt treffen, so dass ein sehr kontinuierlicher Kraftverlauf über dem Relativdrehwinkel zwischen Sperrbasis 30 und Gurtspule 20 sichergestellt wird.

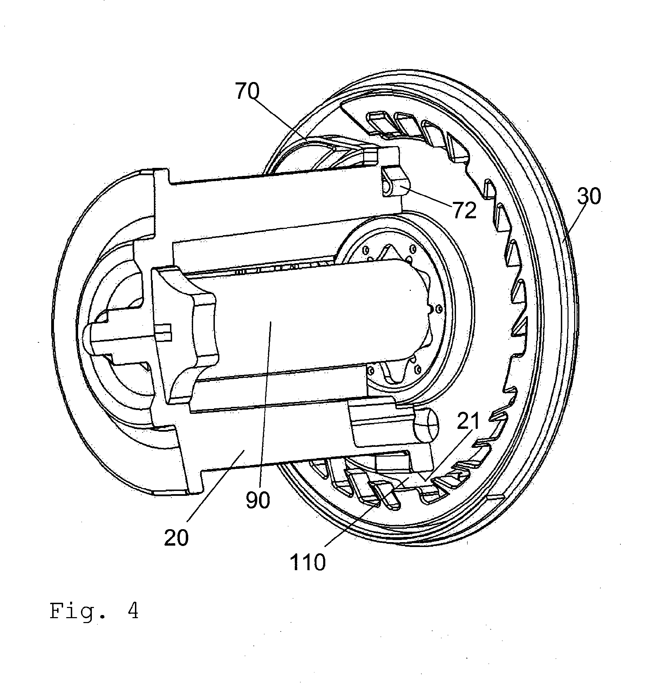

Die Figur 4 zeigt die Bestandteile des Gurtaufrollers 10 gemäß Figur 1 im montierten Zustand, wobei die Gurtspule 20 aufgeschnitten dargestellt ist. Bei der Darstellung gemäß Figur 4 lässt sich erkennen, dass der abgewinkelte Abschnitt 72 des Bandes 70 in der Gurtspule 20 eingehängt ist, so dass im Falle einer Relativdrehung zwischen der Gurtspule 20 und der Sperrbasis 30 das Band in den ringförmigen Spalt 110 zwischen den drei Ringscheiben sowie den ringförmigen äußeren Abschnitt 21 der Gurtspule 20 gezogen wird.

Darüber hinaus erkennt man in der Figur 4 den montierten Torsionsstab 90, der im Falle einer Relativdrehung zwischen der Sperrbasis 30 und der Gurtspule 20 eine weitere Gurtrückhaltekraft erzeugt, die zusätzlich zu der Gurtrückhaltekraft, die durch das Band 70 hervorgerufen wird, auftritt. Obwohl sowohl der Torsionsstab 90 als auch das Band 70 dieselbe Funktion aufweisen, nämlich eine Gurtrückhaltekraft im Falle einer Relativdrehung zwischen Sperrbasis 30 und Gurtspule 20 zu erzeugen, arbeiten diese beiden Komponenten separat voneinander, so dass die Gurtrückhaltekraft mittels dieser zwei Komponenten unabhängig voneinander eingestellt werden kann. Auf den Torsionsstab kann im Übrigen verzichtet werden, wenn eine ausreichende Gurtrückhaltekraft durch das Band 70 allein erzeugt wird.

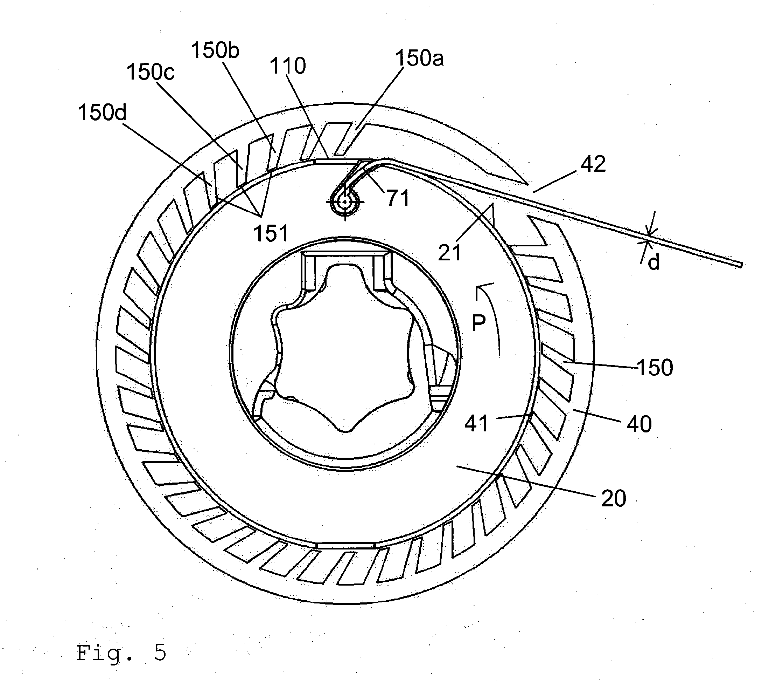

Im Zusammenhang mit den Figuren 5, 6 und 7 wird nun die Funktionsweise des Bandes 70 beim Gurtaufroller 10 gemäß den Figuren 1 bis 4 näher erläutert. In der Figur 5 dargestellt ist ein Querschnitt durch den Gurtaufroller 10 in einer Schnittebene, in der sich die Ringscheibe 40 gemäß Figur 1 befindet.

In der Figur 5 lässt sich erkennen, dass das Bandende 71 des Bandes 70 durch den Schlitz 42 in der Ringscheibe 40 hindurchgeführt und in der Gurtspule 20 eingehängt ist. Der ringförmige Aufbewahrungsspalt, der konzentrisch zu dem ringförmigen Spalt 110 angeordnet ist und diesen radial außen umgibt, ist aus Gründen der Übersicht in der Figur 5 nicht welter dargestellt.

Kommt es nun im Falle eines Blockierens der Sperrbasis zu einer Relativdrehung zwischen der Gurtspule 20 und der Sperrbasis, so wird das Bandende 71 und damit das Band 70 insgesamt in den ringförmigen Spalt 110 zwischen dem ringförmigen äußeren Abschnitt 21 der Gurtspule 20 und der Ringinnenwand 41 der Ringscheibe 40 hineingezogen. Die Zähne 150, die an der Ringinnenwand 41 der Ringscheibe 40 ausgebildet sind, sind derart dimensioniert, dass der Abstand zwischen der Zahnspitze 151 und dem ringförmigen äußeren Abschnitt 21 der Gurtspule 20 kleiner ist als die Dicke d des Bandes 70. Dies führt dazu, dass bei einem Auftreffen des Bandes 70 auf den in der Figur 5 ersten Zahn 150a eine Deformation dieses Zahnes auftreten wird und Deformationsenergie verbraucht wird. In entsprechender Weise werden die weiteren Zähne 150b, 150c, 150d usw. deformiert, wenn bei einer Relativdrehung der Gurtspule 20 entlang der Drehrichtung P das Band 70 auf diese trifft.

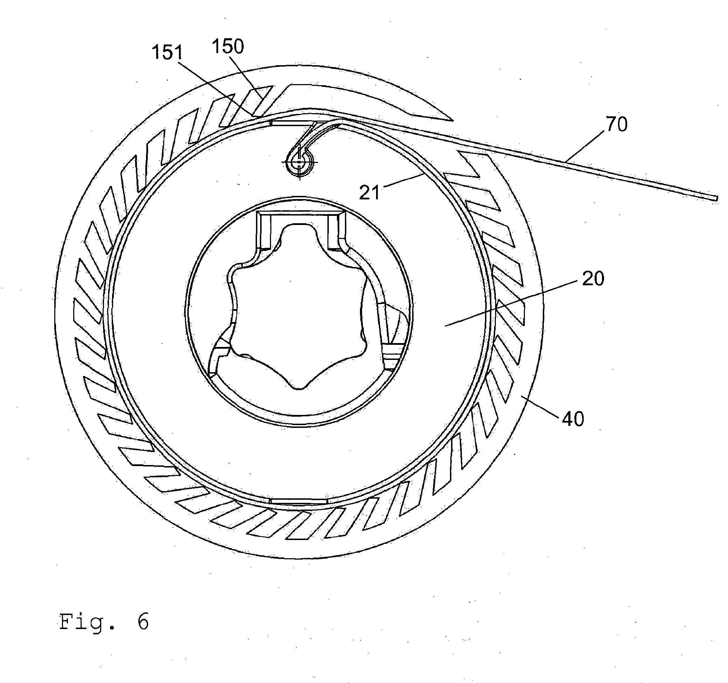

Die Figur 6 zeigt die Situation, nachdem die Gurtspule 20 um 360° relativ zur Sperrbasis verdreht worden ist. Es lässt sich erkennen, dass die Zahnspitzen 151 der an der Ringinnenwand der Ringscheibe 40 angeordneten Zähne 150 deformiert worden sind, da der ursprüngliche Abstand zwischen den Zahnspitzen 151 und dem ringförmigen äußeren Abschnitt 21 der Gurtspule 20 kleiner war als die Dicke des Bandes 70. In entsprechender Weise wird es zu einer weiteren Verformung und zu einem weiteren Wegbiegen der Zahnspitzen 151 der Zähne 150 an der Ringinnenwand der Ringscheibe 40 kommen, wenn ein weiteres Eindrehen des Bandes 70 in den ringförmigen Spalt erfolgt.

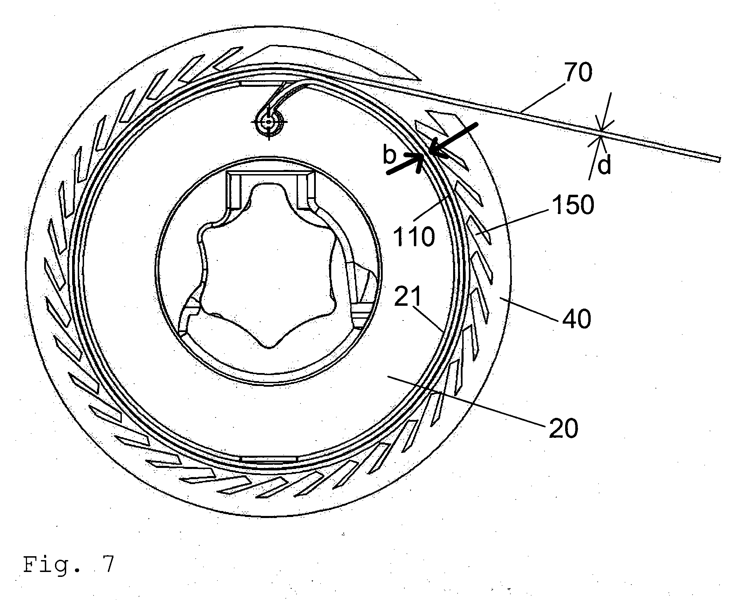

Die Figur 7 zeigt die Situation nach zwei Umdrehungen der Gurtspule 20 relativ zur Sperrbasis. Es lässt sich erkennen, dass die Spaltbreite b - in radialer Richtung gesehen - des ringförmigen Spalts 110 durch das Hineinziehen bzw. das Aufwickeln des Bandes 70 auf dem ringförmigen Abschnitt 21 der Gurtspule 20 zugenommen hat, wobei die Erhöhung der Spaltbreite b auf einer Deformation der Zähne 150, die als deformierbare Elemente arbeiten, beruht.

Zusammengefasst lässt sich feststellen, dass bei dem Ausführungsbeispiel gemäß den Figuren 1 bis 7 ein ringförmiger Spalt 110 vorhanden ist, der außenseitig durch deformierbare Elemente in Form von nach innen ragenden Zähnen 150 begrenzt ist, so dass bei einer Relativdrehung zwischen der Gurtspule 20 und der Sperrbasis 30 sowie einem Hineinziehen des Bandes 70 in den ringförmigen Spalt 110 eine Deformation der Zähne 150 auftritt, wodurch eine Gurtrückhaltekraft hervorgerufen wird.

Bei dem Material des Bandes 70 handelt es sich vorzugsweise um Edelstahl oder Federstahl, dessen Festigkeitswert Rm mindestens 1400 N/mm² beträgt.

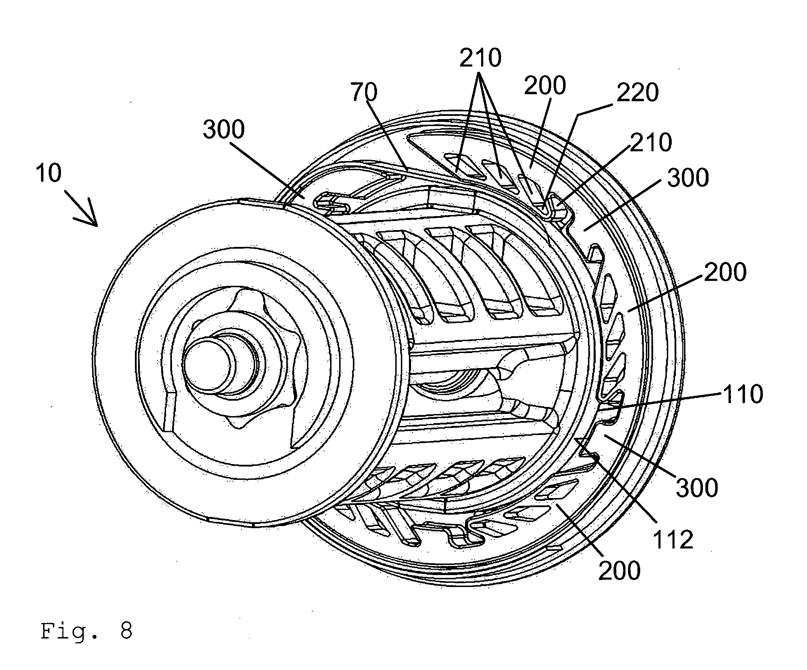

Die Figur 8 zeigt Bestandteile eines zweiten Ausführungsbeispiels für einen erfindungsgemäßen Gurtaufroller 10. Bei diesem Ausführungsbeispiel sind die Ringscheiben, deren Ringinnenwände die äußere ringförmige Spaltwand 112 des ringförmigen Spalts 110 bilden, nicht mit Zähnen versehen, wie dies bei dem Ausführungsbeispiel gemäß den Figuren 1 bis 7 der Fall ist. Stattdessen sind die deformierbaren Elemente durch brückenkonstruktionsähnliche Deformationsglieder 200 gebildet, die jeweils vier Stützglieder 210 aufweisen. Die vier Stützglieder 210 sind durch einen Verbindungsabschnitt 220 miteinander verbunden. Der Verbindungsabschnitt 220 ist vorzugsweise kreisbogenförmig.

Wie sich in der Figur 8 erkennen lässt, ist vorzugsweise eine Mehrzahl an Deformationsgliedern 200 vorhanden, die drehsymmetrisch angeordnet sind. Die Deformationsglieder 200 können unmittelbar aneinandergrenzend angeordnet sein oder - wie beispielhaft in der Figur 8 gezeigt - durch Trennabschnitte 300 getrennt sein.

Bezüglich der Funktionsweise des Gurtaufrollers 10 gemäß Figur 8 gelten die obigen Ausführungen entsprechend. Vorzugsweise ist die Dicke des Bandes 70 größer als die Spaltbreite - in radialer Richtung betrachtet - des ringförmigen Spaltes 110, so dass es bei einem Eindrehen des Bandes 70 in den ringförmigen Spalt 110 zu einer Deformation der deformierbaren Elemente bzw. der Deformationsglieder 200 und zu einer Erzeugung von Deformationsenergie kommt, die wiederum zu einer Gurtrückhaltekraft im Falle einer Relativdrehung zwischen Gurtspule 20 und Sperrbasis 30 führt. Alternativ kann die Spaltbreite - in radialer Richtung betrachtet - des ringförmigen Spaltes 110 auch größer als die Dicke des Bandes 70 sein, so dass es zu einem Verbiegen der Deformationsglieder 200 erst nach einer oder mehreren Umdrehungen der Gurtspule kommt.

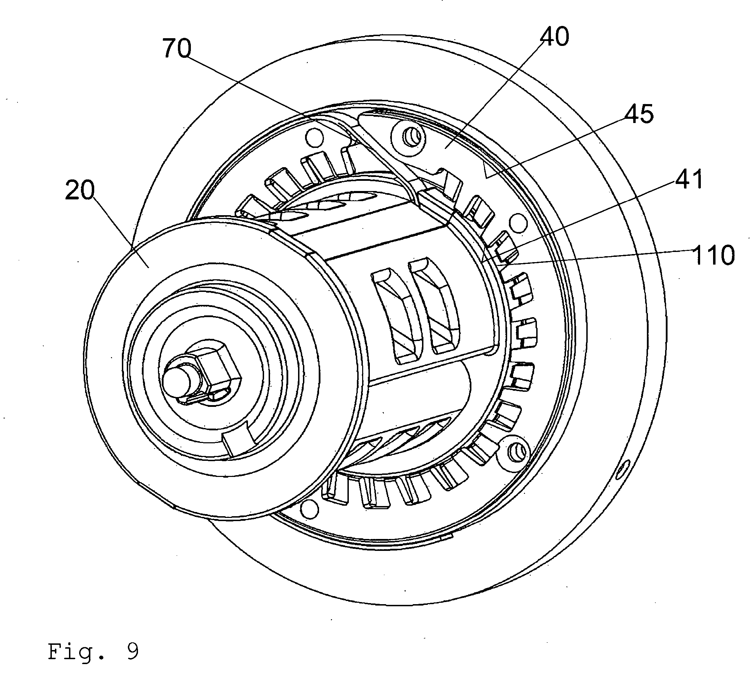

Die Figur 9 zeigt Bestandteile eines dritten Ausführungsbeispiels für einen Gurtaufroller. Bei diesem Ausführungsbeispiel liegt das Band 70 auf der Außenkontur bzw. Außenseite 45 der Ringscheibe 40 sowie auf der Außenkontur bzw. Außenseite der übrigen Ringscheiben 50 und 60 auf und wird von dieser Außenseite 45 in einen zwischen der Ringinnenwand 41 der Ringscheibe 40 und der Sperrbasis 20 befindlichen Spalt 110 gezogen. Die Befestigung der Ringscheiben an der Sperrbasis 20 erfolgt bei diesem Ausführungsbeispiel vorzugsweise durch Schrauben oder Bolzen.

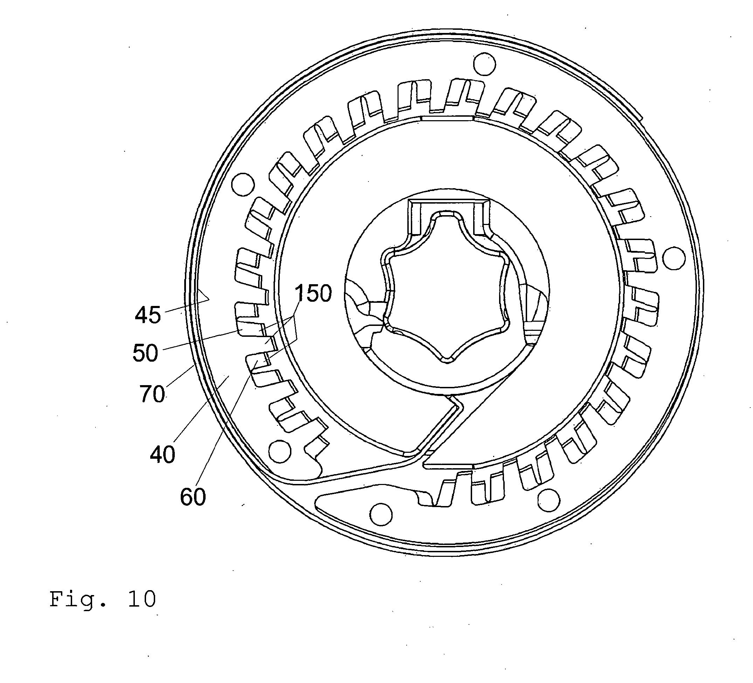

Figur 10 zeigtdas Ausführungsbeispiel gemäß Figur 9 nochmals in einer anderen Darstellung, bei der man neben der Ringscheibe 40 auch die Ringscheiben 50 und 60 sowie den Drehversatz der Zähne 150 erkennt. Auch lässt sich erkennen, dass das Band 70 auf der Außenseite 45 der Ringscheibe 40 aufliegt und von dort in den Spalt gezogen wird.

Die Figur 11 zeigt Bestandteile eines vierten Ausführungsbeispiel für einen Gurtaufroller. Bei diesem Ausführungsbeispiels wird die Ringscheibe 40 durch Formschluss in einem Trennring 130 gehalten, der vorzugsweise einteilig an der Sperrbasis angeformt ist. Der Formschluss beruht auf einer wellenförmigen Innenkontur 133 des Trennringes 130 und einer wellenförmigen Außenkontur bzw. Außenseite 45 des Innenrings 40. Selbstverständlich kann der Trennring 130 in derselben Weise weitere Innenringe formschlüssig halten, wenn solche vorhanden sind. Auf Schrauben oder Bolzen zum Fixieren des Innenrings 40 kann bei dieser Ausgestaltung verzichtet werden.

Das Band 70 liegt bei dem Ausführungsbeispiel gemäß Figur 11 an der Außenwand 131 des Trennrings 130 an und wird von dort in den nicht weiter dargestellten Spalt zwischen der Ringinnenwand der Ringscheibe 40 und der Sperrbasis gezogen.

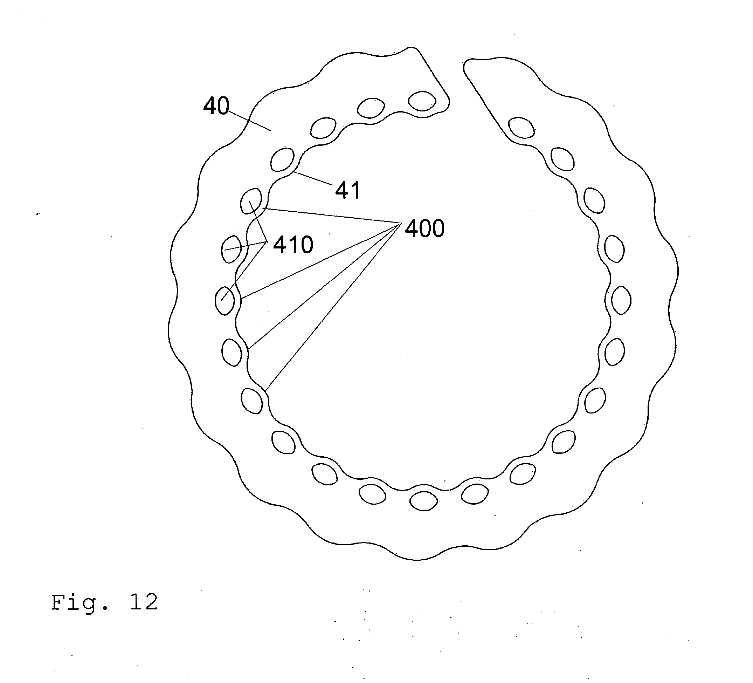

Die Figur 12 zeigt ein anderes Ausführungsbeispiel für die Ausgestaltung deformierbarer Elemente 400 an der Innenkontur von Innenringen. Man sieht einen Innenring 40, an dessen Ringinnenwand 41 anstelle von Zähnen bogenförmige Vorsprünge vorhanden sind, die durch radial außen bzw. radial hinter der Ringinnenwand 41 angeordnete Löcher 410 oder Bohrungen geschwächt sind, so dass bei einem Hineinziehen eines Bands die bogenförmigen Vorsprünge nach außen verbogen werden können. Die Deformierbarkeit der deformierbaren Elemente wird also durch hinterliegenden bzw. vergrabenen Löcher oder Bohrungen bewirkt.

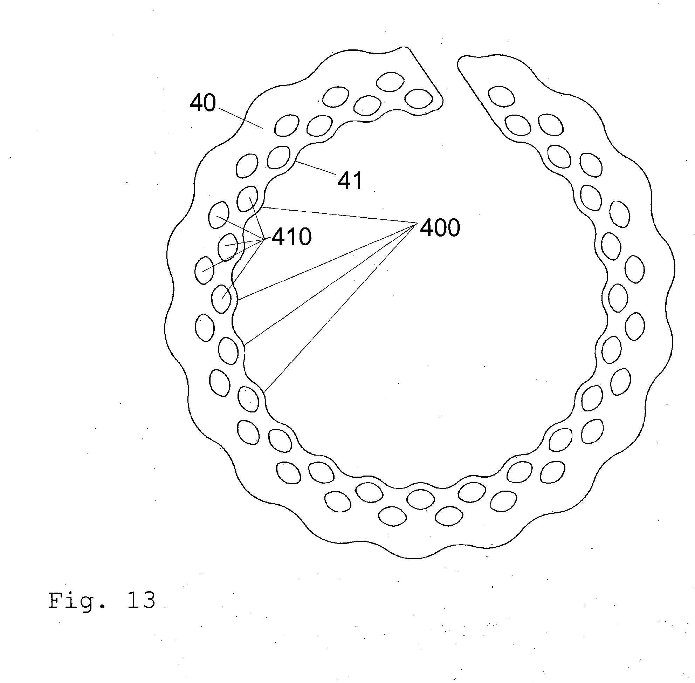

Die Figur 13 zeigt ein weiteres Ausführungsbeispiel für die Ausgestaltung deformierbarer Elemente 400 an der Innenkontur eines Innenrings 40, wobei die Deformierbarkeit der deformierbaren Elemente 400 durch hinterliegende Löcher oder Bohrungen 410 mit unterschiedlichem radialen Abstand bewirkt wird. Im Übrigen entspricht das Ausführungsbeispiel gemäß Figur 13 dem Ausführungsbeispiel gemäß Figur 12.

Bei den Ausführungsbeispielen gemäß Figur 12 und 13 weist der Innenring 40 eine wellenförmigen Außenkontur bzw. Außenseite auf, so dass eine formschlüssige Anbindung an die Sperrbasis, beispielsweise an einen Trennring der Sperrbasis möglich ist. Selbstverständlich kann auch eine andere Art der Anbindung an die Sperrbasis erfolgen, beispielsweise durch Schrauben, Bolzen oder dergleichen.

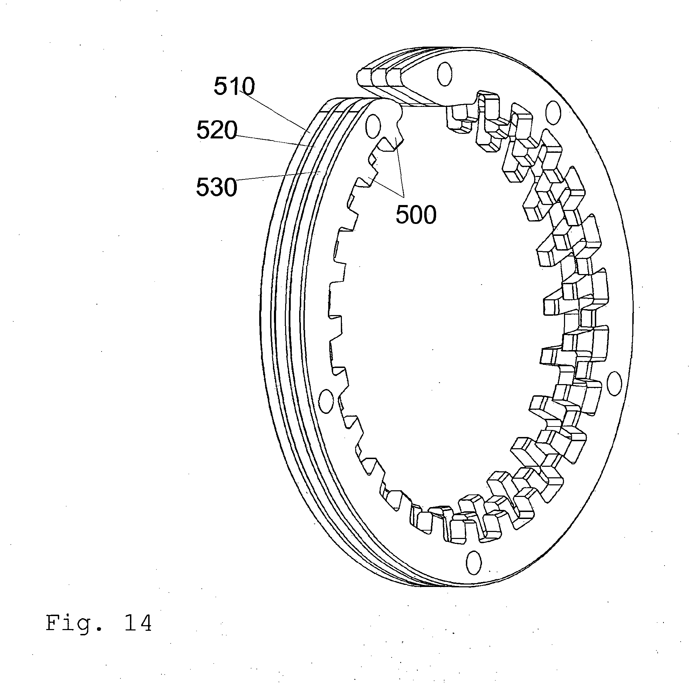

Die Figur 14 zeigt beispielhaft in einer weiteren Darstellung einen Drehwinkelversatz zwischen deformierbaren Elementen 500 benachbarter Ringscheiben 510, 520 und 530. Eine verdrehte Anordnung der deformierbaren Elemente 500 zueinander ermöglicht es in besonders einfacher Weise, einen stetigen Verlauf der Gurtbandauszugskraft über dem Relativdrehwinkel zwischen Sperrbasis und Gurtspule zu erreichen, da Krafteinbrüche in den Abschnitten zwischen aufeinanderfolgenden deformierbaren Elementen einer Ringscheibe durch versetzt angeordnete deformierbare Elemente einer anderen Ringscheibe kompensiert werden können.

Bezüglich des Aufrollzustands des Bands 70 beim montierten und einsatzbereiten Gurtaufroller gibt es verschiedene Möglichkeiten, die hier kurz beispielhaft skizziert werden sollen:
1. Es wird lediglich das Bandende 71 in die Gurtspule eingehängt, das übrige Bandmaterial bleibt außerhalb des Spaltes und wird erst im späteren Einsatz des Gurtaufrollers bei einer beispielsweise unfallbedingten Relativdrehung zwischen Gurtspule und Sperrbasis in den Spalt gezogen.
2. Es wird bereits bei der Montage des Gurtaufrollers ein Abschnitt des Bands 70 in den Spalt gezogen oder in den Spalt eingesetzt, so dass der Einhängepunkt des Bandendes 71 in der Gurtspule mechanisch entlastet wird. Beispielsweise kann der fertig montierte Zustand so aussehen, wie er in den Figuren 5 und 6 gezeigt ist.
3. Es wird bereits bei der Montage des Gurtaufrollers die Gurtspule relativ zur Sperrbasis verdreht, so dass ein Abschnitt des Bands 70 in den Spalt gezogen wird. Ein solches Verdrehen kann bis zu einem vorgegebenen Drehwinkel oder bis zum Erreichen eines vorgegebenen Drehmoments erfolgen. Bei der letztgenannten Variante wird erreicht, dass bei einem späteren Einsatz des Gurtaufrollers im Falle einer z. B. unfallbedingten Relativdrehung zwischen Gurtspule und Sperrbasis sofort ein fest vorgegebenes Drehmoment sehr genau zur Verfügung steht. Bauteiltoleranzen können so in einfacher Weise kompensiert werden.

Wie sich den obigen Ausführungen entnehmen lässt, basiert die Erzeugung einer Gurtauszugskraft auf einer Aufweitung der Spaltbreite des ringförmigen Spaltes 110, wenn das Band 70 die deformierbaren Elemente, die spaltwandseitig vorgesehen sind, verformt. Je nach Material der deformierbaren Elemente, der Spaltbreite des ringförmigen Spalts 110 sowie der Dicke des Bandes 70 können unterschiedliche Betriebsarten des Gurtaufrollers realisiert werden: Beispielsweise ist es möglich, die Relativdrehung zwischen der Gurtspule 20 und der Sperrbasis 30 zu beenden, wenn das Band 70 vollständig in den ringförmigen Spalt 110 hineingezogen worden ist; dies ist beispielsweise durch ein Stoppelement am anderen Bandende des Bandes 70 möglich. Alternativ kann ein Stoppen der Relativdrehung zwischen Sperrbasis und Gurtspule dadurch erreicht werden, dass ab einem vorgegebenen Drehwinkel eine weitere Drehung dadurch unterbunden wird, dass die deformierbaren Elemente eine weitere Erhöhung der Spaltbreite verhindern und die Gurtspule 20 durch das im ringförmigen Spalt 110 eingeklemmte Band 70 gestoppt wird. Auch ist es möglich, das Band 70 vollständig in den ringförmigen Spalt 110 hineinziehen zu lassen und ein Beenden der Relativdrehung der Gurtspule 20 durch andere Komponenten als das Gurtband 70 zu bewirken.

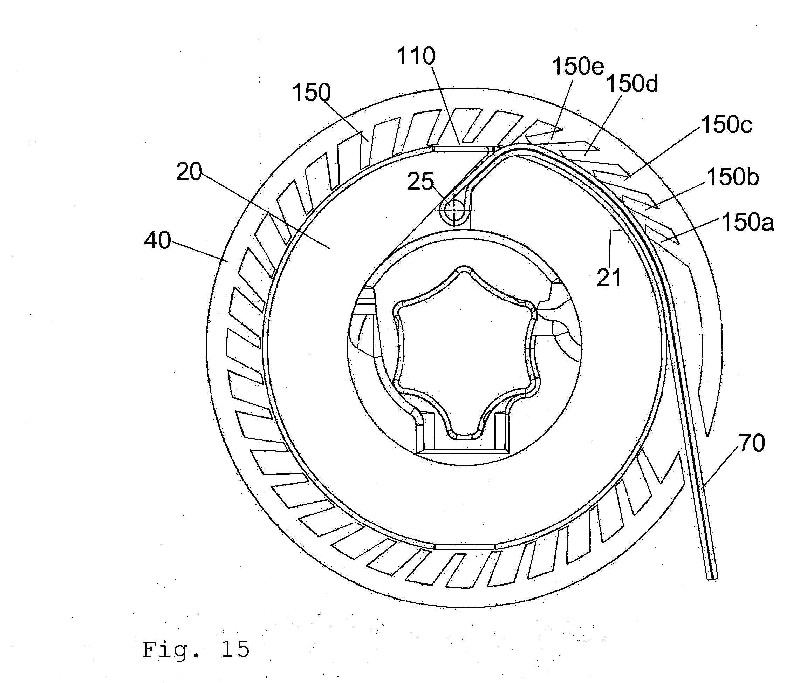

Die Figur 15 zeigt Bestandteile eines fünften Ausführungsbeispiels für einen Gurtaufroller. Bei diesem Ausführungsbeispiel ist das Band an einer Einhängestelle 25 doppellagig in die Gurtspule 20 eingehängt und wird doppellagig in den Spalt 110 zwischen dem mit der Sperrbasis drehfest verbundenen Innenring 40 und dem äußeren Abschnitt 21 der Gurtspule 20 eingezogen. Die Gurtrückhaltekraft ist aufgrund der Doppellagigkeit des Bandes 70 deutlich größer als im Falle eines einlagigen Bandeinzugs (vgl. "einlagige" Ausführungsbeispiele gemäß den Figuren 1 bis 14), weil die Zähne 150 deutlich mehr deformiert werden müssen und dem Gurtbandauszug demgemäß eine größere Deformationskraft entgegenwirkt als im Falle eines einlagigen Bandeinzugs. Darüber hinaus tritt nachfolgend aufgrund der ggf. auftretenden elastischen Rückstellkraft der Zähne 150 eine vergrößerte Reibungskraft als bei einem einlagigen Bandeinzug auf.

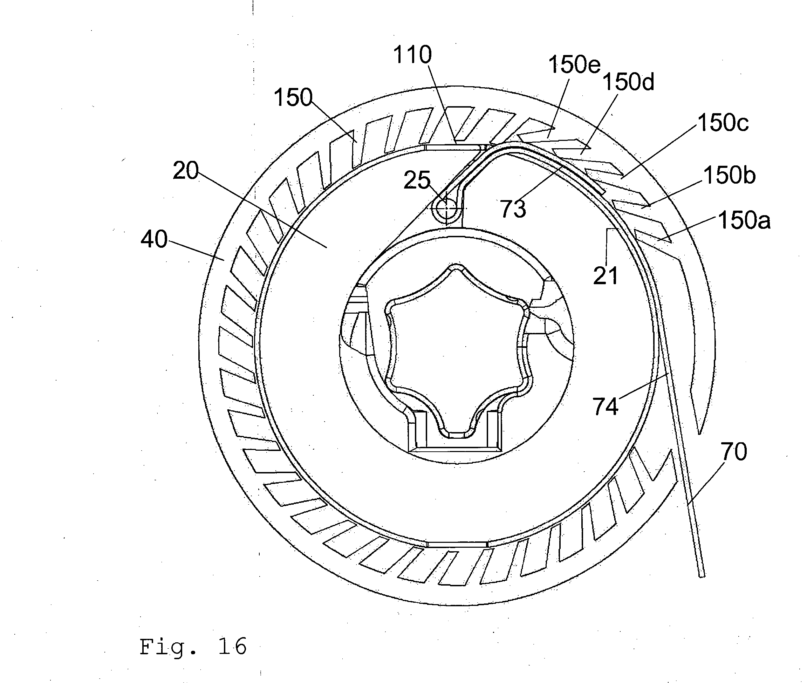

Die Figur 16 zeigt Bestandteile eines sechsten Ausführungsbeispiels für einen Gurtaufroller. Bei diesem Ausführungsbeispiel ist das Band 70 an einer Einhängestelle 25 doppellagig in die Gurtspule 20 eingehängt und wird mit einem vorderen doppellagigen Bandabschitt 73 doppellagig in den Spalt 110 zwischen Gurtspule 20 und Sperrbasis eingezogen. Im Unterschied zu dem Ausführungsbeispiel gemäß Figur 15 wird das Band 70 jedoch nicht dauerhaft doppellagig eingezogen, sondern nur mit dem vorderen doppellagigen Bandabschnitt 73. An den vorderen doppellagigen Bandabschnitt 73, der in der Gurtspule 20 eingehängt ist, schließt sich ein hinterer einlagiger Bandabschnitt 74 an, der einlagig eingezogen wird bzw. zu einem einlagigen Bandeinzug führt.

Aufgrund des doppellagigen Bandeinzugs werden die Zähne 150 im Wesentlichen jeweils nur durch den doppellagigen Abschnitt 73 deformiert, nicht hingegen durch den nachfolgenden einlagigen Abschnitt 74. Selbst wenn aufgrund einer gewissen Elastizität der Zähne (vgl. Zähne 150a und 150b in Figur 16) nach dem Passieren des doppellagigen Bandabschnitts 73 ein gewisses Zurückfedern der Zähne 150a und 150 b in Richtung Spalt 110 auftritt, so wird die Anpresskraft der Zähne 150a und 150b relativ gering sein - zumindest deutlich geringer als die Anpresskraft der auf den doppellagigen Bandabschnitt 73 wirkenden Zähne 150c, 150d und 150e -, so dass die Reibungskraft, die durch die auf den einlagigen Bandabschnitt 74 wirkenden Zähne 150a und 150b hervorgerufen wird, deutlich geringer, wenn nicht gar vernachlässigbar klein, ist. Sind die Zähne 150 nicht oder nur wenig elastisch, so kann der einlagige Bandeinzug auch ohne Kontakt zu den Zähnen 150 und ohne Reibung erfolgen, da die Zähne 150 durch den doppellagigen Bandabschnitt 73 schon ausreichend weggebogen sein können.

Der doppelagige Bandeinzug, wie er im Zusammenhang mit den Figuren 15 und 16 erläutert wurde, kann in identischer Weise bei anders als Zähnen geformten deformierbaren Elementen eingesetzt werden, beispielsweise bei den deformierbaren Elementen, wie sie im Zusammenhang mit den Figuren 8, 12 und 13 erläutert wurden.

### Bezugszeichenliste

- 10: Gurtaufroller
- 20: Gurtspule
- 21: äußerer Abschnitt
- 22: Schlitz25 Einhängestelle
- 30: Sperrbasis
- 40: Ringscheibe
- 41: Ringinnenwand
- 42: Schlitz
- 45: Außenseite
- 50: Ringscheibe
- 51: Ringinnenwand
- 52: Schlitz
- 60: Ringscheibe
- 61: Ringinnenwand
- 62: Schlitz
- 70: Band
- 71: Bandende
- 72: Abschnitt
- 73: vorderer doppellagiger Bandabschitt
- 74: hinterer einlagiger Bandabschnitt
- 80: Trennscheibe
- 90: Torsionsstab
- 100: Gehäusering
- 110: Spalt
- 111: innere ringförmige Spaltwand
- 112: äußere ringförmige Spaltwand
- 120: Aufbewahrungsspalt
- 130: Trennring
- 131: Außenwand
- 132: Schlitz
- 133: Innenkontur
- 140: Bolzen
- 150: Zahn
- 150a: Zahn
- 150b: Zahn
- 150c: Zahn
- 150d: Zahn
- 151: Zahnspitze
- 200: Deformationsglied
- 210: Stützglied
- 220: Verbindungsabschnitt
- 300: Trennabschnitt
- 400: deformierbares Element
- 410: Loch
- 500: deformierbares Element
- 510: Ringscheibe
- 520: Ringscheibe
- 530: Ringscheibe

- b: Spaltbreite
- d: Dicke
- P: Drehrichtung

## Patentansprüche

1. Gurtaufroller (10) für einen Sicherheitsgurt mit
- einer Gurtspule (20) zum Auf- und Abwickeln des Sicherheitsgurts und
- einer mit der Gurtspule (20) in Verbindung stehenden, sperrbaren Sperrbasis (30), die vor einem Sperren mit der Gurtspule (20) mitgedreht wird und nach einem Sperren in ihrer Drehbewegung blockiert wird,
- wobei im Falle eines Sperrens der Sperrbasis (30) zwecks Gurtkraftbegrenzung eine Relativdrehung zwischen Sperrbasis (30) und Gurtspule (20) möglich ist und
- wobei der Gurtaufroller ein Band (70) aufweist, das im Falle einer Relativdrehung zwischen Gurtspule und Sperrbasis in einen Spalt (110) gezogen wird,
**dadurch gekennzeichnet, dass**
- der Spalt (110) randseitig durch zumindest ein deformierbares Element (150, 200) begrenzt ist, das von dem in den Spalt (110) gezogenen Band (70) deformiert wird.

2. Gurtaufroller (10) nach Anspruch 1,
**dadurch gekennzeichnet, dass**
der Spalt (110) ringförmig ist und durch eine äußere ringförmige Spaltwand (112) und innere ringförmige Spaltwand (111) begrenzt ist.

3. Gurtaufroller (10) nach Anspruch 2,
**dadurch gekennzeichnet, dass**
das zumindest eine deformierbare Element (150, 200) an der äußeren ringförmigen Spaltwand (112) oder an der inneren ringförmigen Spaltwand (111) ausgebildet ist und
im Falle einer Deformation des zumindest einen deformierbaren Elements die Spaltbreite (b) des ringförmigen Spalts (110) - in radialer Richtung betrachtet - vergrößert wird.

4. Gurtaufroller (10) nach Anspruch 3,
**dadurch gekennzeichnet, dass**
die äußere Spaltwand (112) des Spaltes (110) durch die Ringinnenwände (41, 51, 61) zumindest zweier - entlang der Gurtspulenachse gesehen - hintereinander angeordneter Ringscheiben (40, 50, 60) gebildet wird, die jeweils mit einer Vielzahl an nach innen ragenden deformierbaren Elementen (150, 200) ausgestattet sind.

5. Gurtaufroller (10) nach Anspruch 4,
**dadurch gekennzeichnet, dass**
die nach innen ragenden deformierbaren Elemente (150, 200) zumindest zweier Ringscheiben (40, 50, 60) derart relativ zueinander verdreht angeordnet sind, dass das Band (70) beim Einführen in den Spalt (110) auf die nach innen ragenden deformierbaren Elemente der zumindest zwei Ringscheiben (40, 50, 60) zeitlich versetzt trifft.

6. Gurtaufroller (10) nach Anspruch 5,
**dadurch gekennzeichnet, dass**
die äußere Spaltwand (112) des Spaltes (110) durch die Ringinnenwände (41, 51, 61) zumindest dreier - entlang der Gurtspulenachse gesehen - hintereinander angeordneter Ringscheiben (40, 50, 60) gebildet wird, die jeweils mit einer Vielzahl an nach innen ragenden deformierbaren Elementen (150, 200) ausgestattet sind, wobei die nach innen ragenden deformierbaren Elemente der Ringscheiben (40, 50, 60) zueinander verdreht sind und das Band beim Einführen in den Spalt auf die nach innen ragenden deformierbaren Elementen der zumindest drei Ringscheiben zeitlich versetzt trifft.

7. Gurtaufroller (10) nach einem der Ansprüche 4-6,
**dadurch gekennzeichnet, dass**
die Ringscheiben (40, 50, 60) Guss- oder Stanzteile sind, die mit der Sperrbasis drehfest verbunden, insbesondere auf sie aufgesteckt oder in sie eingelegt sind.

8. Gurtaufroller (10) nach einem der voranstehenden Ansprüche,
**dadurch gekennzeichnet, dass**
der Spalt (110) einerseits durch die Sperrbasis (30) oder zumindest ein mit der Sperrbasis drehfest verbundenes Element und andererseits durch die Gurtspule (20) oder zumindest ein mit der Gurtspule drehfest verbundenes Element begrenzt ist.

9. Gurtaufroller (10) nach einem der voranstehenden Ansprüche,
**dadurch gekennzeichnet, dass**
die innere ringförmige Spaltwand (111) durch einen ringförmigen äußeren Abschnitt (21) der Gurtspule (20) gebildet ist.

10. Gurtaufroller (10) nach einem der voranstehenden Ansprüche,
**dadurch gekennzeichnet, dass**
der Spalt (110) und/oder die ringförmigen Spaltwände (111, 112) konzentrisch zu der Achse des Gurtaufrollers angeordnet sind.

11. Gurtaufroller (10) nach einem der voranstehenden Ansprüche,
**dadurch gekennzeichnet, dass**
das Band (70) mit einem Bandende (71) mit der Gurtspule (20) verbunden ist.

12. Gurtaufroller (10) nach einem der voranstehenden Ansprüche,
**dadurch gekennzeichnet, dass**
der Gurtaufroller (20) einen ringförmigen Aufbewahrungsspalt (120) aufweist, in dem das Band (70) vor einer Relativdrehung zwischen Gurtspule (20) und Sperrbasis (30) aufgewickelt aufbewahrt wird und von dem es im Falle einer Relativdrehung zwischen Sperrbasis und Gurtaufroller in den Spalt (110) mit dem zumindest einen deformierbaren Element (150, 200) hineingezogen wird.

13. Gurtaufroller (10) nach Anspruch 12,
**dadurch gekennzeichnet, dass**
der ringförmige Aufbewahrungsspalt (120) sowie der Spalt (110), der durch das zumindest eine deformierbare Element begrenzt ist, konzentrisch zueinander angeordnet sind.

14. Gurtaufroller (10) nach einem der voranstehenden Ansprüche,
**dadurch gekennzeichnet, dass**
- zumindest eines der deformierbaren Elemente durch einen Zahn (150) oder Vorsprung gebildet ist, der in Richtung des Spaltinneren ausgerichtet ist, und /oder
- zumindest eines der deformierbaren Elemente (200) zumindest zwei Stützglieder (210) umfasst, die miteinander durch einen Verbindungsabschnitt (220) verbunden sind, der einen bogenförmigen Abschnitt der äußeren ringförmigen Spaltwand oder der inneren ringförmigen Spaltwand bildet.

15. Verfahren zum Montieren eines Gurtaufrollers nach einem der voranstehenden Ansprüche,
**dadurch gekennzeichnet, dass**
im Rahmen der Montage die Gurtspule (20) relativ zur Sperrbasis (30) gedreht und das Band (70) in den Spalt (110) gezogen wird, bis das zum Drehen erforderliche Drehmoment einen vorgegebenen Maximalwert erreicht hat.

## Claims

1. Belt retractor (10) for a seatbelt, with
- a belt reel (20) for winding up and unwinding the seatbelt, and
- a lockable locking base (30) which is connected to the belt reel (20) and, before locking, is rotated together with the belt reel (20) and, after locking, is blocked in its rotational movement,
- wherein, in the event of locking of the locking base (30) for the purpose of limiting the belt force, a relative rotation between locking base (30) and belt reel (20) is possible and
- wherein the belt retractor has a band (70) which, in the event of a relative rotation between belt reel and locking base, is drawn into a gap (110), **characterized in that**
- the edge of the gap (110) is bounded by at least one deformable element (150, 200) which is deformed by the band (70) drawn into the gap (110).

2. Belt retractor (10) according to Claim 1, **characterized in that** the gap (110) is annular and is bounded by an outer annular gap wall (112) and an inner annular gap wall (111).

3. Belt retractor (10) according to Claim 2, **characterized in that** the at least one deformable element (150, 200) is formed on the outer annular gap wall (112) or on the inner annular gap wall (111) and, in the event of a deformation of the at least one deformable element, the gap width (b) of the annular gap (110) is increased - as viewed in the radial direction.

4. Belt retractor (10) according to Claim 3, **characterized in that** the outer gap wall (112) of the gap (110) is formed by the annular inner walls (41, 51, 61) of at least two annular disks (40, 50, 60) which are arranged one behind another - as seen along the belt reel axis - and are in each case provided with a multiplicity of inwardly projecting, deformable elements (150, 200).

5. Belt retractor (10) according to Claim 4, **characterized in that** the inwardly projecting, deformable elements (150, 200) of at least two annular disks (40, 50, 60) are arranged rotated relative to one another in such a manner that the band (70), on introduction into the gap (110), runs in a time-staggered manner against the inwardly projecting, deformable elements of the at least two annular disks (40, 50, 60).

6. Belt retractor (10) according to Claim 5, **characterized in that** the outer gap wall (112) of the gap (110) is formed by the annular inner walls (41, 51, 61) of at least three annular disks (40, 50, 60) which are arranged one behind another - as seen along the belt reel axis - and are in each case provided with a multiplicity of inwardly projecting, deformable elements (150, 200), wherein the inwardly projecting, deformable elements of the annular disks (40, 50, 60) are rotated with respect to one another and the band, on introduction into the gap, runs in a time-staggered manner against the inwardly projecting, deformable elements of the at least three annular disks.

7. Belt retractor (10) according to one of Claims 4-6, **characterized in that** the annular disks (40, 50, 60) are cast or punched parts which are connected to the locking base for rotation therewith, in particular are attached to said locking base or placed into the latter.

8. Belt retractor (10) according to one of the preceding claims, **characterized in that** the gap (110) is bounded on one side by the locking base (30) or by at least one element connected to the locking base for rotation therewith and on the other side by the belt reel (20) or by at least one element connected to the belt reel for rotation therewith.

9. Belt retractor (10) according to one of the preceding claims, **characterized in that** the inner annular gap wall (111) is formed by an annular outer section (21) of the belt reel (20).

10. Belt retractor (10) according to one of the preceding claims, **characterized in that** the gap (110) and/or the annular gap walls (111, 112) are arranged concentrically with respect to the axis of the belt retractor.

11. Belt retractor (10) according to one of the preceding claims, **characterized in that** the band (70) is connected at one band end (71) to the belt reel (20).

12. Belt retractor (10) according to one of the preceding claims, **characterized in that** the belt retractor (20) has an annular storage gap (120) in which the band (70) is stored in wound-up form before a relative rotation between belt reel (20) and locking base (30) and from which, in the event of a relative rotation between locking base and belt retractor, said band is drawn into the gap (110) by the at least one deformable element (150, 200).

13. Belt retractor (10) according to Claim 12, **characterized in that** the annular storage gap (120) and the gap (110) which is bounded by the at least one deformable element are arranged concentrically with respect to each other.

14. Belt retractor (10) according to one of the preceding claims, **characterized in that**
- at least one of the deformable elements is formed by a tooth (150) or projection which is oriented in the direction of the interior of the gap, and/or
- at least one of the deformable elements (200) comprises at least two supporting members (210) which are connected to each other by a connecting section (220) which forms an arcuate section of the outer annular gap wall or of the inner annular gap wall.

15. Method for mounting a belt retractor according to one of the preceding claims, **characterized in that**, within the scope of the installation, the belt reel (20) is rotated relative to the locking base (30) and the band (70) is drawn into the gap (110) until the torque required for the rotation has reached a predetermined maximum value.

## Revendications

1. Enrouleur de ceinture (10) pour une ceinture de sécurité, comprenant
- une bobine de ceinture (20) pour enrouler et dérouler la ceinture de sécurité et
- une base de verrouillage (30) pouvant être verrouillée, en liaison avec la bobine de ceinture (20), laquelle base de verrouillage est tournée conjointement avec la bobine de ceinture (20) avant un verrouillage et est bloquée dans son mouvement de rotation après un verrouillage,
- une rotation relative entre la base de verrouillage (30) et la bobine de ceinture (20) étant possible dans le cas d'un verrouillage de la base de verrouillage (30) à des fins de limitation de la force de ceinture, et
- l'enrouleur de ceinture comprenant une bande (70) qui est tirée dans un interstice (110) dans le cas d'une rotation relative entre la bobine de ceinture et la base de verrouillage,
**caractérisé en ce que**
- l'interstice (110) est limité du côté du bord par au moins un élément déformable (150, 200) qui est déformé par la bande (70) tirée dans l'interstice (110).

2. Enrouleur de ceinture (10) selon la revendication 1,
**caractérisé en ce que**
l'interstice (110) est annulaire et est limité par une paroi d'interstice annulaire extérieure (112) et une paroi d'interstice annulaire intérieure (111).

3. Enrouleur de ceinture (10) selon la revendication 2,
**caractérisé en ce**
**qu'**au moins un élément déformable (150, 200) est réalisé sur la paroi d'interstice annulaire extérieure (112) ou sur la paroi d'interstice annulaire intérieure (111) et, dans le cas d'une déformation de l'au moins un élément déformable, la largeur d'interstice (b) de l'interstice annulaire (110) est agrandie, considérée dans la direction radiale.

4. Enrouleur de ceinture (10) selon la revendication 3,
**caractérisé en ce que**
la paroi d'interstice extérieure (112) de l'interstice (110) est formée par les parois intérieures annulaires (41, 51, 61) d'au moins deux disques annulaires (40, 50, 60) disposés les uns derrière les autres, vus le long de l'axe de bobine de ceinture, lesquels disques annulaires sont dotés respectivement d'une pluralité d'éléments déformables (150, 200) faisant saillie vers l'intérieur.

5. Enrouleur de ceinture (10) selon la revendication 4,
**caractérisé en ce que**
les éléments déformables (150, 200) faisant saillie vers l'intérieur d'au moins deux disques annulaires (40, 50, 60) sont disposés de manière tournée les uns par rapport aux autres de telle sorte que la bande (70) frappe de manière décalée dans le temps sur les éléments déformables faisant saillie vers l'intérieur des au moins deux disques annulaires (40, 50, 60) lors de l'introduction dans l'interstice (110).

6. Enrouleur de ceinture (10) selon la revendication 5,
**caractérisé en ce que**
la paroi d'interstice extérieure (112) de l'interstice (110) est formée par les parois intérieures annulaires (41, 51, 61) d'au moins trois disques annulaires (40, 50, 60) disposés les uns derrière les autres, vus le long de l'axe de bobine de ceinture, lesquels disques annulaires sont dotés respectivement d'une pluralité d'éléments déformables (150, 200) faisant saillie vers l'intérieur, les éléments déformables faisant saillie vers l'intérieur des disques annulaires (40, 50, 60) étant disposés de manière tournée les uns par rapport aux autres et la bande frappant de manière décalée dans le temps sur les éléments déformables faisant saillie vers l'intérieur des au moins trois disques annulaires lors de l'introduction dans l'interstice.

7. Enrouleur de ceinture (10) selon l'une quelconque des revendications 4 à 6,
**caractérisé en ce que**
les disques annulaires (40, 50, 60) sont des pièces coulées ou estampées qui sont reliées de manière solidaire en rotation à la base de verrouillage, en particulier enfichées sur celle-ci ou insérées dans celle-ci.

8. Enrouleur de ceinture (10) selon l'une quelconque des revendications précédentes,
**caractérisé en ce que**
l'interstice (110) est limité, d'un côté, par la base de verrouillage (30) ou au moins un élément relié de manière solidaire en rotation à la base de verrouillage et, de l'autre côté, par la bobine de ceinture (20) ou au moins un élément relié de manière solidaire en rotation à la bobine de ceinture.

9. Enrouleur de ceinture (10) selon l'une quelconque des revendications précédentes,
**caractérisé en ce que**
la paroi d'interstice annulaire intérieure (111) est formée par une portion extérieure annulaire (21) de la bobine de ceinture (20).

10. Enrouleur de ceinture (10) selon l'une quelconque des revendications précédentes,
**caractérisé en ce que**
l'interstice (110) et/ou les parois d'interstice annulaires (111, 112) sont disposés de manière concentrique à l'axe de l'enrouleur de ceinture.

11. Enrouleur de ceinture (10) selon l'une quelconque des revendications précédentes,
**caractérisé en ce que**
la bande (70) est reliée à la bobine de ceinture (20) par une extrémité de bande (71).

12. Enrouleur de ceinture (10) selon l'une quelconque des revendications précédentes,
**caractérisé en ce que**
l'enrouleur de ceinture (20) comprend un interstice de stockage annulaire (120), dans lequel la bande (70) est stockée de manière enroulée avant une rotation relative entre la bobine de ceinture (20) et la base de verrouillage (30), et à partir duquel la bande est rentrée dans l'interstice (110) à l'aide de l'au moins un élément déformable (150, 200) dans le cas d'une rotation relative entre la base de verrouillage et l'enrouleur de ceinture.

13. Enrouleur de ceinture (10) selon la revendication 12,
**caractérisé en ce que**
l'interstice de stockage annulaire (120) ainsi que l'interstice (110) qui est limité par l'au moins un élément déformable sont disposés de manière concentrique l'un à l'autre.

14. Enrouleur de ceinture (10) selon l'une quelconque des revendications précédentes,
**caractérisé en ce que**
- au moins l'un des éléments déformables est formé par une dent (150) ou une saillie qui est orientée dans la direction de l'intérieur de l'interstice, et/ou
- au moins l'un des éléments déformables (200) comporte au moins deux organes de support (210) qui sont reliés les uns aux autres par une portion de liaison (220) qui forme une portion arquée de la paroi d'interstice annulaire extérieure ou de la paroi d'interstice annulaire intérieure.

15. Procédé de montage d'un enrouleur de ceinture selon l'une quelconque des revendications précédentes,
**caractérisé en ce que**,
dans le cadre du montage, la bobine de ceinture (20) est tournée par rapport à la base de verrouillage (30) et la bande (70) est tirée dans l'interstice (110) jusqu'à ce que le couple nécessaire à la rotation ait atteint une valeur maximale prédéfinie.
